# EUROPÄISCHE PATENTSCHRIFT

(11) **EP 0 798 475 B1**
(45) Veröffentlichungstag und Bekanntmachung des Hinweises auf die Patenterteilung: **07.06.2000**
(21) Anmeldenummer: 97103767.6
(22) Anmeldetag: 06.03.1997
(51) Int. Cl.: F16B 37/08

(54) **Element zum Befestigen einer Matte**
Element for the fixation of a mat
Elément pour la fixation d'un tapis

(30) Priorität: 26.03.1996 DE 29605617 U
(43) Veröffentlichungstag der Anmeldung: 01.10.1997
(73) Patentinhaber: Hellermann Tyton GmbH, 25436 Tornesch (DE)
(72) Erfinder: Rathien, Michael, 25436 Uetersen (DE)
(74) Vertreter: Glawe, Delfs, Moll & Partner

(56) Entgegenhaltungen:
- EP-A- 0 517 279
- EP-A- 0 541 069
- DE-A- 3 228 475
- DE-U- 8 525 508
- FR-A- 2 608 723

## Beschreibung

Die Erfindung bezieht sich auf ein Befestigungselement, das zum Aufsetzen auf einen mit Umfangsvertiefungen (insbesondere Gewinde) versehenen Bolzen bestimmt ist und beispielsweise zum Befestigen einer Matte und/oder eines Kabelbaums an einer den Bolzen tragenden Fläche dient. Ein bekanntes Befestigungselement dieser Art (DE-GM 8525508) enthält einen den Bolzen aufnehmenden Raum, der an zwei gegenüberliegenden Seiten von einem Paar mit der Bolzenoberfläche führend zusammenwirkenden, im Querschnitt in bezug auf die Achse des Raums bzw. des Bolzens etwa radial verlaufenden Stützleisten begrenzt ist. Auf den beiden anderen Seiten sind mindestens zwei einander etwa gegenüberstehende Rastzähne vorgesehen, die zum Rasteingriff in die Umfangsvertiefung des Bolzens bestimmt sind. Stützleisten und Rastzähne sind bei diesem bekannten Befestigungselement über den Umfang wechselnd vorgesehen, so wie dies auch bei anderen bekannten, ähnlichen Befestigungselementen der Fall ist (FR-A-26 08 723, EP-A-541 069, EP-A 517 279, DE-A 32 28 475, EP-A 517 281). Wenn aber nur zwei Stützleisten am Umfang vorhanden sind, leidet die Abstützung des Befestigungselements gegenüber dem Bolzen in den anderen Richtungen. Deshalb sieht das eingangs genannte, bekannte Befestigungselement auf jeder Seite vier Rastzähne vor, die durch ihre große Anzahl eine gewisse Stützwirkung erbringen können. Jedoch zeigt sich, daß die Eingriffsunsicherheit mit der Anzahl der Rastzähne wächst, zumal wenn deren Abstände nicht mit den Abständen der Umfangsvertiefungen des Bolzens genau übereinstimmen. Auch nehmen die Montagekraft und der Herstellungsaufwand mit der Zahl der Rastzähne zu.

Der Erfindung liegt daher die Aufgabe zugrunde, ein Befestigungselement der im Oberbegriff des Anspruchs 1 genannten Art zu schaffen, das mit geringem Aufwand auskommt. Die Lösung liegt in den Merkmalen des Anspruchs 1 und vorzugsweise denen der Unteransprüche.

Erfindungsgemäß werden oberhalb und unterhalb der Rastzähne Stützvorsprünge vorgesehen, die das Befestigungselement an der Oberfläche des Bolzens abstützen. Dadurch wird nicht nur gewährleistet, daß das Befestigungselement in jeder Richtung gegenüber dem Bolzen korrekten Sitz hat sondern auch besser als bei jeder seitlich von Rastzähnen vorgesehenen Abstützung sicherstellt, daß die Rastzähne den korrekten Eingriffsabstand vom Bolzen haben. Dies ist besonders wichtig, wenn ungleiche oder gar wechselnde Seitenkräfte auf das Befestigungselement einwirken, wie es der Fall ist, wenn es zum Halten eines Kabelbaums oder einer Matte in Kraftfahrzeugen dient.

Eine besonders vorteilhafte Ausführungsform des Befestigungselements zeichnet sich dadurch aus, daß die Stützleisten und die die Stützteile tragenden Bauteile nach außen radial springende Rippen tragen oder von solchen Rippen gebildet sind, die vorzugsweise nahe dem Kopf des Befestigungsteils weiter radial vorspringen als an dem Ende, von dem her der Bolzen in das Befestigungselement eingeführt wird. Kopfseitig sind sie zweckmäßigerweise mit einer Kopfplatte des Befestigungselements fest verbunden. Wie Stützpfeiler an einer Mauer verleihen sie dem Befestigungselement dadurch große Stabilität. Zusätzliche, den Bolzenaufnahmeraum des Befestigungselements einschließende Wände werden dadurch weitgehend oder gänzlich entbehrlich. Dies vermindert nicht nur den Materialbedarf sondern gibt auch den Vorteil, daß man bei der Herstellung mit Formelementen von der Seite her in das Befestigungselement eingreifen kann, um beispielsweise die Rastzähne oder die inneren Vorsprünge zu formen. Die Rastzähne können an diesem Ring angeordnet sein oder auch unmittelbar von den zugehörigen Rippenvorsprüngen, ggf. unter Zwischenschaltung von quer zu den Rippen verlaufenden Bauteilen. Auch die inneren, oberen Stützvorsprünge können von dem Ring vorspringen. Wenn in diesem Zusammenhang von "unten" und "oben" die Rede ist, so ist das Befestigungselement in einer Stellung mit vertikaler Symmetriachse und nach oben gewendeter Einführungsseite zu betrachten.

Die Erfindung wird im folgenden näher unter Bezugnahme auf die Zeichnungen erläutert, die ein vorteilhaftes Ausführungsbeispiel veranschaulichen. Darin zeigen:

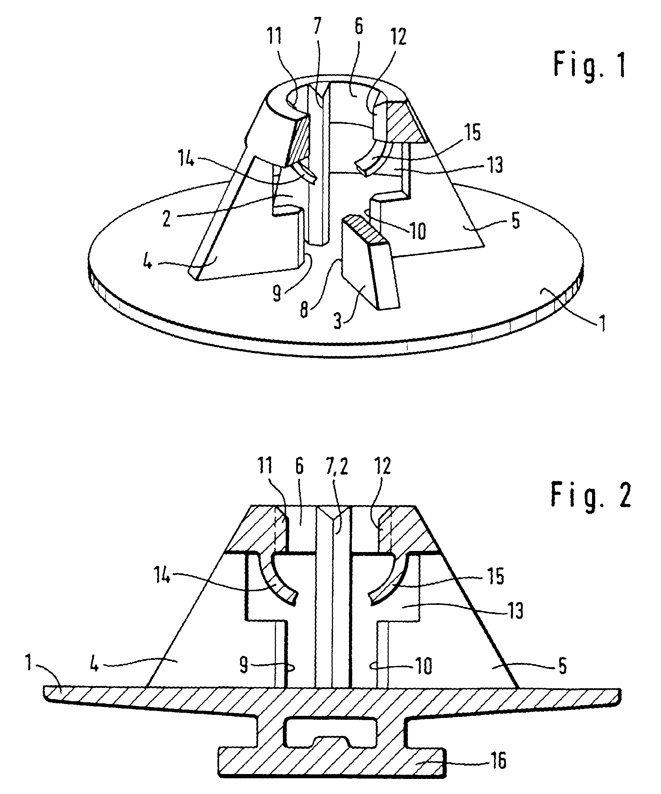

- Fig. 1: eine teilweise geschnittene, perspektivische Ansicht und
- Fig. 2: einen Längsschnitt, jeweils im vergrößerten Maßstab.

Von der Kopfplatte 1 des Befestigungselements, deren Durchmesser in der Größenordnung einiger Zentimeter liegt, erheben sich in der Art von vier kreuzweise angeordneten Stützpfeilern die Rippen 2 bis 5, deren Querschnitte etwa radial und gegeneinander um 90° versetzt angeordnet sind. An ihrem schmalen, oberen Ende sind sie durch einen Ring 6 verbunden. Ihre Außenkanten verlaufen zur Kopfplatte hin schräg nach außen, so daß sie insgesamt eine dreieckige Form annehmen. Mit ihrem breiten Ende sind sie einstückig mit der Kopfplatte 1 verbunden.

Die Rippen 2, 3 bilden an ihren einander gegenüberliegenden Rändern gerade und parallel zueinander durchlaufende Stützleisten 7, 8. Die Rippen 4, 5 bilden in ihrem unteren Bereich Stützvorsprünge 9, 10, die ebenso wie die Stützleisten 7, 8 leistenförmig sind und denselben Abstand voneinander haben. Desgleichen springen am oberen Ende der Rippen 4, 5 auf der Innenseite des Rings 6 Stützvorsprünge 11, 12 vor, die ebenfalls voneinander denselben Abstand haben wie die Stützleisten 7, 8 und die Stützvorsprünge 9, 10. Sie fluchten mit den Stützvorsprüngen 9, 10. Gemeinsam bilden die Stützleisten 7, 8 und die Stützvorsprünge 9 bis 12 eine führende Eingrenzung für den nicht dargestellten Bolzen, der durch das obere, offene Ende in das Befestigungselement eingeführt wird bzw. das Befestigungselement wird mit seinem oben gezeigten Ende voran auf den Bolzen aufgedrückt.

Die Rippen 4, 5 sind in ihrem mittleren Bereich bis zum Ring 6 bei 13 ausgeschnitten, um Raum zu gewinnen für die Rastzähne 14, 15, die am Ring 6 befestigt sind und schräg nach innen ragen, um in Umfangsaufnehmungen des Bolzens einzurasten und dadurch das Befestigungselement auf dem Bolzen festzuhalten.

Zwischen den Rippen 2 bis 5 und zwischen der Kopfplatte 1 und dem Ring 6 ist der den Bolzen aufnehmende Raum des Befestigungselements nach außen hin offen. Das bedeutet, daß beim Spritzpressen des Elements Formteile durch diese Öffnungen in den Raum eingreifen können, um dessen Innenoberflächen und insbesondere die Rastzähne 14, 15 zu formen. Das Element ist symmetrisch ausgebildet, d. h. daß die in der Darstellung weggebrochenen Teile der Rippe 3 und des Rings 6 ebenso ausgebildet sind, wie die ihnen gegenüberliegend dargestellten Teile.

Unterhalb der Kopfplatte 1 ist das Element mit einem Bügel 16 zur Aufnahme eines Kabelbinders versehen.

Das Befestigungselement wird beispielsweise in Kraftfahrzeugen zum Befestigen von Isoliermatten und/oder langgestreckten Gegenständen wie Kabeln oder Schläuchen an Karosserieteilen benutzt. Die zu befestigenden Matten haben an den Befestigungsstellen vorgestanzte Löcher. Sie werden bei der Montage so aufgelegt, daß die Bolzen in den einen etwas größeren Durchmesser aufweisenden Löchern liegen. Dabei kann nicht erwartet werden, daß die Lochränder die Bolzen genau konzentrisch umgeben. Drückt man das Befestigungselement auf einen solchen Bolzen auf, so drücken sich die Rippen 2 bis 5 in den Lochrand kreuzweise ein, wodurch dieser auch bei ungenauer Lage gegen seitliche Verschiebung sicher gehalten wird, ohne daß große Montagekräfte aufgewendet zu werden brauchen. Die Kopfplatte 1 sichert die Matte gegen Abheben von der Montagefläche.

Die Rippen 2 bis 5 bewirken somit einerseits eine leichte und sichere Fixierung der Matte und stellen andererseits gemeinsam mit der Kopfplatte 1 und dem Ring 6 des Befestigungselements eine sehr steife Struktur dar und dienen schließlich mit ihren Innenkanten zur gegenseitigen Führung des Befestigungselements und des Bolzens.

Das Befestigungselement wird einstückig vorzugsweise aus geeignetem Kunststoff geformt, beispielsweise glasfaserverstärktem Polyamid.

Es ist nicht unbedingt erforderlich, daß die Rastzähne auf eine paarige, gegenüberliegende Anordnung beschränkt werden. Beispielsweise kann die Anordnung so abgewandelt werden, daß sechs Rippen vorgesehen sind, von denen jeweils drei in der Art der Rippen 4, 5 mit Rastzähnen 14, 15 und Ausschnitten 13 ausgebildet sind, während die übrigen in der Art der Rippen 2, 3 geformt sind. Es ist auch denkbar, daß sämtliche Rippen mit Rastzähnen versehen werden, d. h. daß die Führungsleisten 7, 8 unterbrochen in der Form der Stützvorsprünge 11, 12 bzw. 9, 10 mit zwischenliegenden Rastzähnen ausgeführt sind. Jedoch hat die dargestellte Ausführung den Vorteil, daß sie sich besonders einfach herstellen läßt.

## Patentansprüche

1. Befestigungselement zum Aufsetzen auf einen mit Umfangsvertiefungen, insbesondere Gewinde, versehenen Bolzen, das einen den Bolzen aufnehmenden Raum enthält, der an gegenüberliegenden Seiten mit der Bolzenoberfläche zusammenzuwirken bestimmte, in bezug auf die Achse des Raums bzw. des Bolzen einen etwa radial verlaufenden Querschnitt bildende Stützleisten (7, 8) und auf anderen Seiten mindestens zwei einander etwa gegenüberstehende Rastzähne (14, 15) aufweist, dadurch gekennzeichnet, daß oberhalb und unterhalb der Rastzähne (14, 15) mit der Oberfläche des Bolzens zusammenzuwirken bestimmte Stützvorsprünge (9, 10, 11, 12) vorgesehen sind.

2. Befestigungselement nach Anspruch 1, dadurch gekennzeichnet, daß die Stützleisten (7, 8) und die Stützvorsprünge (9, 10) als nach außen radial vorspringende Rippen (2 bis 5) ausgebildet sind.

3. Befestigungselement nach Anspruch 2, dadurch gekennzeichnet, daß es eine Einführungsseite und eine Kopfseite aufweist und daß die Rippen (2 bis 5) kopfseitig weiter nach außen vorspringen als einführungsseitig.

4. Befestigungselement nach Anspruch 2 oder 3, dadurch gekennzeichnet, daß es mit einer Kopfplatte (1) versehen ist mit der die Rippen (2 bis 5) fest verbunden sind.

5. Befestigungselement nach einem der Ansprüche 2 bis 4, dadurch gekennzeichnet, daß die Rippen (2 bis 5) einführungsseitig durch einen Ring (6) verbunden sind und der den Bolzen aufnehmende Raum zwischen den Rippen offen ist.

6. Befestigungselement nach Anspruch 5, dadurch gekennzeichnet, daß die Rastzähne (14, 15) an dem Ring (6) angeordnet sind.

## Claims

1. A fastening element to be fitted on to a bolt which is provided with circumferential indentations, in particular a screw-thread, and which includes a space to accommodate the bolt, which space has on opposite sides support strips (7,8) intended to co-operate with the bolt surface and forming an approximately radially extending cross-section in relation to the axis of the space or of the bolt, and which on other sides has at least two approximately opposed locating teeth (14,15), characterised in that support projections (9,10,11, 12) intended to co-operate with the surface of the bolt are provided above and below the locating teeth (14,15).

2. A fastening element according to Claim 1, characterised in that the support strips (7,8) and the support projections (9,10) are in the form of radially outwardly protruding ribs (2to 5).

3. A fastening element according to Claim 2, characterised in that it has an insertion end and a head end, and in that the ribs (2 to 5) protrude further outwards on the head end than on the insertion end.

4. A fastening element according to Claim 2 or 3, characterised in that it is provided with a head plate (1), with which the ribs (2 to 5) are securely connected.

5. A fastening sleeve according to any one of Claims 2 to 4, characterised in that the ribs (2 to 5) are connected by a ring (6) on the insertion end and the space accommodating the bolt is open between the ribs.

6. A fastening sleeve according to Claim 5, characterised in that the locating teeth (14,15) are disposed on the ring (6).

## Revendications

1. Elément de fixation destiné à être placé sur une tige pourvue de creux périphériques, notamment d'un filetage, qui contient un espace recevant la tige, lequel présente sur des côtés opposés des baguettes d'appui (7, 8) déterminées, qui coopèrent avec la surface de la tige et qui forment, par rapport à l'axe de l'espace ou de la tige, une section transversale s'étendant à peu près radialement, et sur l'autre côté, au moins deux dents d'encliquetage (14, 15) à peu près en vis-à-vis, caractérisé en ce qu'au-dessus et au-dessous des dents d'encliquetage (14, 15) sont prévues des saillies d'appui (9, 10, 11, 12) déterminées qui coopèrent avec la surface de la tige.

2. Elément de fixation selon la revendication 1, caractérisé en ce que les baguettes d'appui (7, 8) et les saillies d'appui (9, 10) sont réalisées sous la forme de nervures (2 à 5) faisant saillie radialement vers l'extérieur.

3. Elément de fixation selon la revendication 2, caractérisé en ce qu'il présente un côté d'introduction et un côté de tête et en ce que les nervures (9 à 5) font saillie plus loin vers l'extérieur côté tête que côté introduction.

4. Elément de fixation selon la revendication 2 ou 3, caractérisé en ce qu'il est pourvu d'une plaque de tête (1) à laquelle les nervures (2 à 5) sont reliées fixement.

5. Elément de fixation selon l'une des revendications 2 à 4, caractérisé en ce que les nervures (2 à 5) sont reliées côté introduction par un anneau (6) et en ce que l'espace qui reçoit la tige est ouvert entre les nervures.

6. Elément de fixation selon la revendication 5, caractérisé en ce que les dents d'encliquetage (14, 15) sont disposées sur l'anneau (6).
